# EUROPEAN PATENT APPLICATION

(11) **EP 2 296 323 A1**
(43) Date of publication of application: **16.03.2011**
(21) Application number: 09305831.1
(22) Date of filing: 11.09.2009
(51) Int. Cl.: H04L 12/56

(54) **Phased OSPF database synchronization**

(71) Applicant: Alcatel Lucent, 75008 Paris (FR)
(72) Inventor: Papadimitriou, Dimitri, 1190, Brussels (BE)
(74) Representative: D'Halleweyn, Nele Veerle Trees Gertrudis

(57) **Abstract**

The invention presents an improvement to the OSPF routing protocol with respect to the handling of opaque LSAs. The delay in the establishment of fully adjacent routers is avoided by proceeding with the adjacency determination even if the opaque link-state database is not synchronized. The present invention segments the synchronization process and adds, on top of the database synchronization process known from RFC 2328, a synchronization process dedicated to the opaque LSAs.

## Description

### Field of the Invention

The present invention relates to the field of internet routing protocols, more specifically to the Open Shortest Path First (OSPF) protocol.

### Background

Opaque link-state advertisements (LSAs) provide a generalized mechanism to allow for the future extensibility of the Open Shortest Path First (OSPF) protocol. Since their introduction, opaque LSAs have been used by different kinds of applications wishing to distribute information between link-local neighbors, within areas, or across areas (corresponding to OSPFv2 opaque LSAs of types 9, 10, and 11, respectively, and their OPSFv3 equivalents). Such information is often not related to the organization of the forwarding of IP packets. This usage, in combination with certain aspects of the OSPF protocol, has been causing a marked deterioration in OSPF performance in networks hosting such applications.

### Summary

In a general embodiment, the method for exchanging data between routers according to the present invention comprises receiving from a neighboring router a first control value, calculated over representative data of a first link state database portion, which comprises LSAs of a type outside the range assigned to opaque LSAs.

In one embodiment, the method of the present invention further comprises sending database description packets to the neighboring router for LSAs of a second link state database portion, which comprises LSAs of a type in the range assigned to opaque LSAs; identifying, if the ascertaining is successful, outdated LSAs of the second link state database portion; sending link state request packets to the neighboring router pertaining to more recent LSAs corresponding to the outdated LSAs; receiving link state updates for the outdated LSAs; receiving a second control value, calculated over representative data of the second link state database portion.

In a particular embodiment of the method of the present invention, each of the database description packets has a sequence number, and the method further comprises receiving from said neighboring router an acknowledgment for each of the database description packets. In a more particular embodiment, the sending of each one of the database description packets other than the first one is contingent on receiving from the neighboring router an acknowledgment for the most recently transmitted one of the database description packets.

In another particular embodiment, the method of the present invention further comprises ascertaining that a link state request list is empty prior to the exchanging of the second control value.

In yet another particular embodiment, the method of the present invention further comprises entering a Full state if the verifying of the second control value is successful.

In one embodiment, the method of the present invention further comprises starting an exchange of LSAs of a type outside the range assigned to opaque LSAs if the verifying of the first control value is unsuccessful.

In a general embodiment, a router according to the present invention comprises a first link state database portion for storing LSAs of a type outside the range assigned to opaque LSAs; a first checksum agent for calculating a first control value over the entries of said first link state database portion; a first verifier adapted to verify verification data received from a neighboring router against the first control value; a second link state database portion for storing LSAs in the range assigned to opaque LSAs; a description agent adapted to generate database description packets for LSAs of the second link state database portion for transmission to the neighboring router; a request agent adapted to generate link state request packets for transmission to said neighbor, said link state request packets pertaining to more recent opaque LSAs corresponding to said outdated opaque LSAs; an update agent adapted to update the second link state database portion on the basis of link state updates for the outdated opaque LSAs received from said neighboring router; a second checksum agent for calculating a second control value over the entries of the second link state database portion; and a second verifier adapted to verify verification data received from a neighboring router against said second control value.

### Brief Description of the Figures

Some embodiments of apparatus and/or methods in accordance with embodiments of the present invention are now described, by way of example only, and with reference to the accompanying drawings, in which:
Figure 1 illustrates a state diagram for an implementation of OSPF according to the state of the art;
Figure 2 illustrates a state diagram for an implementation of OSPF according to the present invention;
Figure 3 illustrates a flow diagram of an embodiment of the method according to the present invention;
Figure 4 illustrates a block diagram of an embodiment of the router according to the present invention;

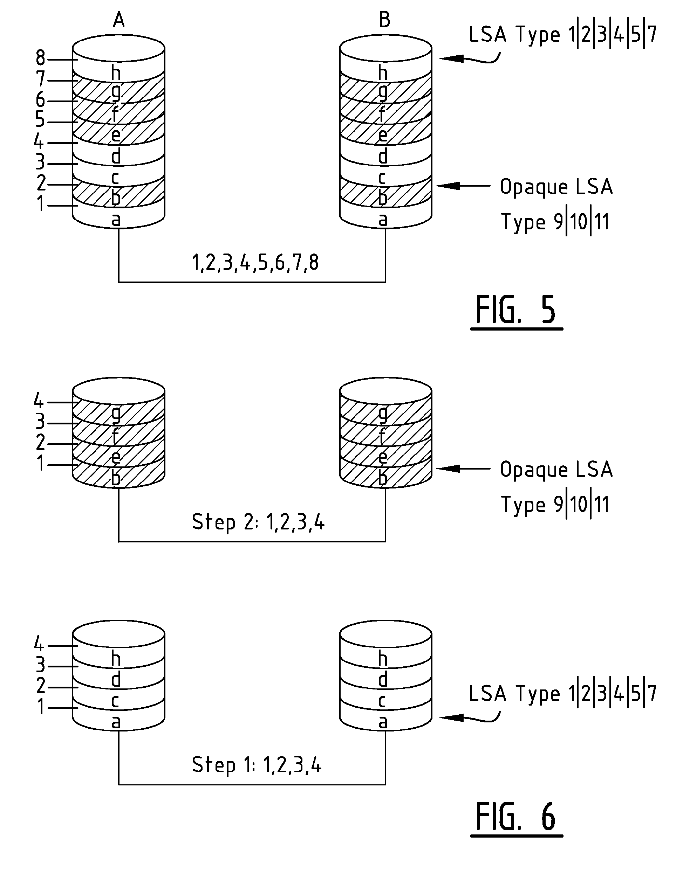

Figure 5 schematically illustrates the order of exchange of a mix of opaque and non-opaque LSAs according to the prior art, as known from RFC 2328 and RFC 2370;
Figure 6 schematically illustrates a known improvement over the prior art of Figure 5, consisting of placing the opaque LSAs in a separate database governed by a separate OSPF instance;
Figure 7 schematically illustrates the order of exchange of a mix of opaque and non-opaque LSAs according to the invention, where opaque and non-opaque LSAs share a single OSPF instance;
Figure 8 schematically illustrates the order of exchange of a different mix of opaque and non-opaque LSAs according to the invention, where opaque and non-opaque LSAs share a single OSPF instance.

### Description of Embodiments

OSPF provides a reliable and effective database synchronization mechanism, as well as a link-state flooding mechanism, to keep all concerned routers up to date of the relevant topology of the area in which it operates. One goal is to rapidly establish adjacency between routers, i.e. form the appropriate relationships between selected neighboring routers for the purpose of exchanging routing information.

Opaque LSAs consist of a standard LSA header followed by a 32-bit aligned application-specific information field. Standard link-state database flooding mechanisms are used for distribution of opaque LSAs throughout the local network or subnetwork, the OSPF area, or the entire autonomous system (AS). Opaque LSAs are "opaque" in the sense that the routers that process them are not capable, or at least not expected, to look inside and deal with the contents of these LSAs. Routers typically only participate in the distribution of opaque LSAs, and in passing them on to the appropriate superior layer of the protocol stack that is designated to accept the Opaque Information field included in these LSAs.

Opaque LSAs were added to the original OSPF framework by RFC 2370. The mechanism by which opaque LSAs are supported, was designed with the assumption that opaque LSAs would comprise a negligible load upon the OSPF infrastructure. The possibility to exchange opaque LSAs has been reused by many distributed network applications that rely on OSPF to exchange different kinds of information that is not directly or indirectly related to the forwarding of IP packets. The occurrence of such non-routing applications "piggybacking" on the OSPF datagram exchanges can cause significant delay in the synchronization process.

Unlike actual internal routing information, the number of entries resulting from information transported inside opaque LSAs is not necessarily bounded by the number of links in the autonomous system. In case the number of entries is not so limited, this will often lead to a delayed synchronization process.

The problem is therefore somewhat similar to the problem of storing AS-external LSAs, which are in theory unlimited in number. The scheme proposed in RFC 1765 limits the number of AS-external LSAs to be stored in each router, to avoid excessive storage requirements. Although a similar limitation scheme is not desirable for opaque LSAs, an embodiment of the method of the present invention may be seen as complementary to the scheme of RFC 1765.

Although the embodiments described herein relate to the OSPF protocol, the person skilled in the art shall appreciate that the same techniques may be applied to other routing protocols, preferably link-state routing protocols, offering similar capabilities as OSPF, without departing from the scope of the invention. Although the term "LSA" is defined by the OSPF standards, the skilled person will understand that the term, as used herein, covers any data element or datagram used in any routing protocol to exchange topological data between routers. The skilled person will likewise understand that an "opaque LSA", as used herein, designates the opaque counterpart of these data elements or datagrams. The present invention may be applied to any exchange of opaque LSAs, regardless of the application for which they are used.

The mechanism of the present invention phases the database synchronization process by separately exchanging IP routing LSAs (router, network, summary and AS-external LSAs) and opaque LSAs. The IP routing related database is separately validated by its own control value, which may be exchanged separately.

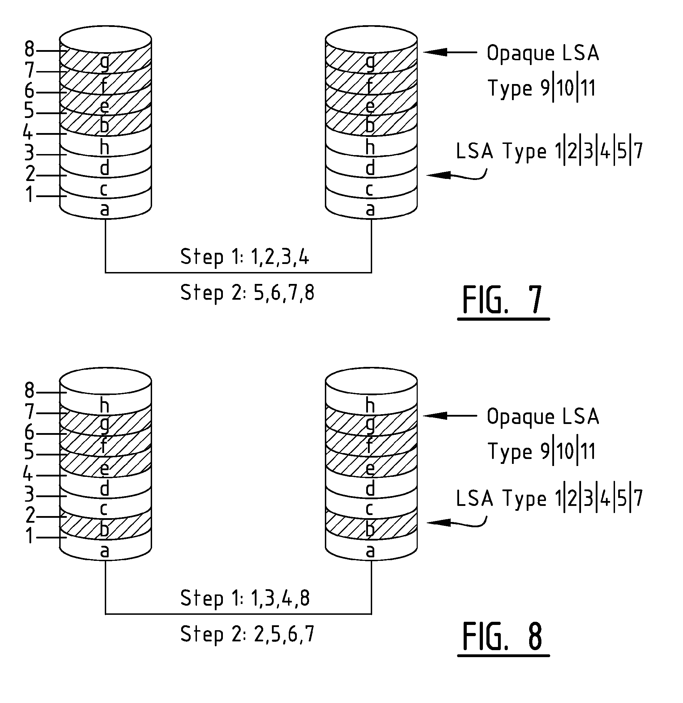

It should be noted that the two database portions described in the present application are conceptually separate, though they do not have to be physically separate. It suffices for the purposes of the invention that the set of IP routing LSAs and the set of opaque LSAs can be processed in separate steps, as virtually independent databases, as illustrated in Figure 7 and Figure 8. The use of the term "database portion" herein shall therefore be understood to include "logical databases" consisting of different subsets of a physically common database, as well as physically separate databases, as the case may be.

As the relevant adjacency information is listed in LSAs, the delay in the establishment of fully adjacent routers can be avoided by proceeding with the adjacency determination even if the opaque link-state database portion is not synchronized. In many cases, the parasite application itself makes use of the IP adjacencies for application-specific message exchanges, so such an application would in fact benefit from avoiding the delay. Thus, the present invention segments the synchronization process and adds, on top of the database synchronization process known from RFC 2328, a synchronization process dedicated to the opaque LSAs.

An embodiment of the present invention is based on the insight that the state "Full" may be considered as the invariant state for reaching full adjacency.

It is an object of an embodiment of the present invention to serialize the database exchanges. This object may advantageously be achieved by performing phased synchronization, starting with the most critical database entries, and calculating a partial control value at each step of the synchronization process, while maintaining a unique OSPF instance. Embodiments of the present invention thus overcome and/or avoid the problem of having to associate distinct OSPF instances per class of LSA and the problem of having to preemptively inhibit overflow situations.

In a link-state routing algorithm, it is very important for all routers' link-state databases to stay synchronized. In OSPF, this is achieved in a simplified manner by requiring only adjacent routers to remain synchronized.

The synchronization process begins as soon as the routers attempt to bring up the routing adjacency. In a process known as the "Database Exchange Process", each router describes its database by sending a sequence of Database Description (DD) packets to its neighbor. Each Database Description Packet describes a set of LSAs belonging to the router's database. When the neighbor sees a description of an LSA that is more recent than its own database copy, it marks this LSA for an update request.

During this process, the two routers form a master/slave relationship. Each Database Description Packet has a sequence number. Database Description Packets sent by the master (polls) are acknowledged by the slave through echoing of the sequence number. Both polls and their responses contain summaries of link state data.

The master is the only one allowed to retransmit Database Description Packets. It does so only at fixed intervals, the length of which may be configured for each interface in the constant RxmtInterval.

A neighbor is considered opaque-capable if and only if it sets the O-bit in the Options field of its Database Description packets; the O-bit is not set in packets other than Database Description packets. Hence, an opaque-capable router can learn its neighbor's opaque-capability at the beginning of the "Database Exchange Process" (in state "ExStart").

Then, in the next step of the "Database Exchange process", opaque LSAs are included in the Database summary list that is sent to the neighbor if and only if the neighbor is opaque-capable. Furthermore, opaque LSAs are only flooded to opaque-capable neighbors.

The introduction of opaque LSAs only impacts the action associated with the state "ExStart" **100** and event "NegotiationDone" **105,** in the original OSPF state machine. There, the Database summary list is built in order to incorporate the opaque LSA in OSPF.

Compared to the OSPF processing according to the prior art as known from RFC 2370, the present invention modifies the Database Exchange process as follows: opaque LSAs are included in the Database summary list that is sent to the neighbor if and only if
i) the neighbor is opaque capable; and
ii) the neighbor has exchanged the area link state database portion that consists of the router-LSAs, network-LSAs and summary-LSAs contained in the area structure, along with the AS-external-LSAs contained in the global structure i.e. the "Full" state has been reached.

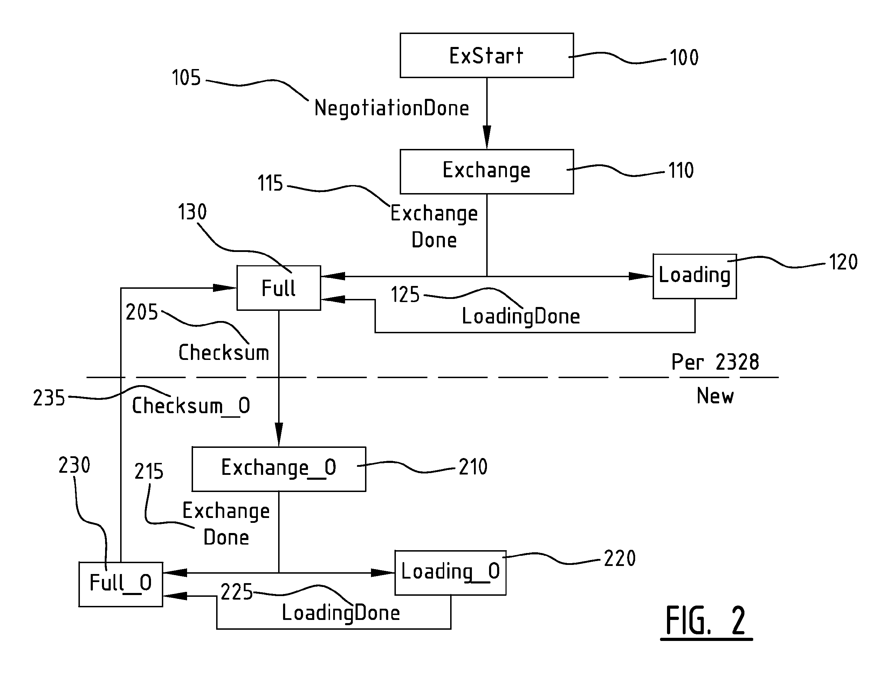

The process according to the present invention is depicted in Figure 2. The "ExStart" **100,** "Exchange" **110,** "Loading" **120,** and "Full" **130** states are defined per RFC 2328. In the "Full" **130** state, the router can perform all subsequent operations per RFC 2328, including in particular the computation of the shortest-path tree for an area, and the computation of the AS external routes, as described in Section 16 of RFC 2328. The events "NegotiationDone" **105,** "ExchangeDone" **115,** and "LoadingDone" **125** are defined as in RFC 2328.

The "Checksum" **205** event according to the present invention corresponds to the neighbor exchange of and verification of the control value over the Link State database portion that contains LSAs of types 1-5. If the control value verification is unsuccessful, the exchanges restart; the state machine returns to the "ExStart" **100** state.

In a preferred embodiment of the present invention, the process may continue according to the following steps if the control value verification is successful.

Upon successful control value verification, the system transitions from the "Full" **130** state to the "Exchange_O" **210** state.

In the "Exchange_O" **210** state, the router lists the contents of its opaque area link-state database portion in the neighbor Database summary list. The opaque area link-state database portion consists of Type 9 and Type 10 opaque LSAs along with Type 11 opaque LSAs contained in the global structure. The router sends the Database Description packets for these opaque LSAs to the neighbor. Each Database Description Packet has a DD sequence number, and is explicitly acknowledged. Preferably, only one Database Description Packet is allowed outstanding at any one time; i.e., receipt of an explicit acknowledgment of a previous Database Description Packet is required before a subsequent Database Description Packet is sent.

In the "Exchange_O" **210** state, Link State Request Packets may also be sent asking for the neighbor's more recent opaque LSAs.

Upon occurrence of the "ExchangeDone" **215** event, the system transitions from the "Exchange_O" **210** state to the "Loading_O" **220** state. The "ExchangeDone" event occurs when both routers have successfully transmitted a full sequence of Database Description packets, and each router therefore knows what parts of its opaque link state database portion are out of date.

In the "Loading_O" **220** state, Link State Request packets are sent to the neighbor asking for the more recent opaque LSAs that have been discovered (but not yet received) in the Exchange_O **210** state.

Upon occurrence of the "LoadingDone" **225** event, the system transitions from the "Loading_O" **220** state to the "Full_O" **230** state. The "LoadingDone" event occurs when Link State Updates have been received for all out-of-date elements of the opaque link state database portion. This is indicated by the link state request list becoming empty after the Database Exchange process has completed.

In the "Full_O" **230** state, neighboring nodes have completed the opaque LSA exchange. A control value on the opaque link state database portion is exchanged, the verification of which is a precondition for return to the "Full" **130** state, through the "Checksum_O" **235** event.

In an embodiment of the present invention the control value referred to in the Checksum **205** event is calculated as the 16-bit one's complement of the one's complement sum of one or more 16-bit words related to each of the type 1-5 LSAs in the router's link state database.

In other embodiments, the control value may be any verification value calculated over data representative of the contents of the database portion to which it pertains, allowing to assert with a high degree of confidence that databases with identical control values also have identical contents.

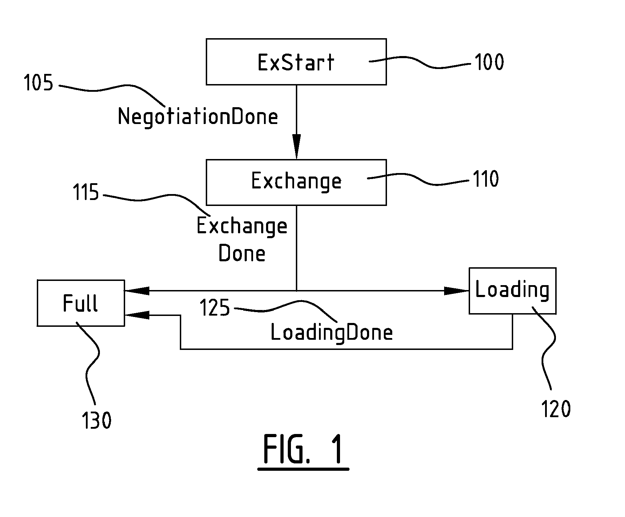

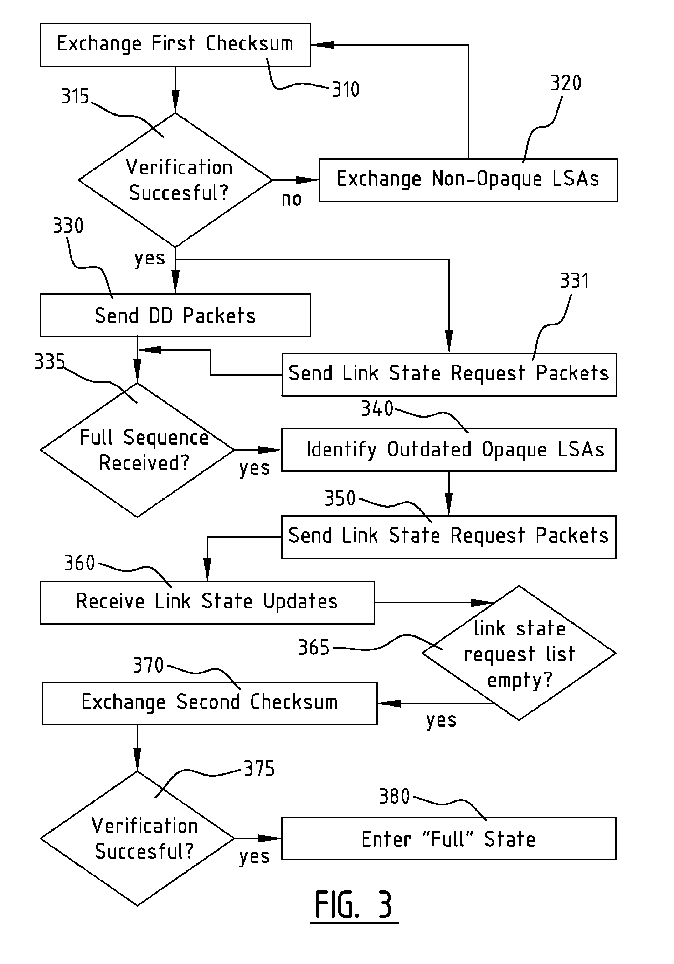

With reference to Figure 3, an embodiment of a method for exchanging data between routers according to the present invention may be conceived as follows. A first control value, calculated over representative data of a first link state database portion, which comprises LSAs of a type outside the range assigned to opaque LSAs, is exchanged **310** with a neighboring router. The locally computed control value is verified **315** against the one received from the neighboring router. If the verification **315** of the first control value is unsuccessful, an exchange of LSAs of a type outside the range assigned to opaque LSAs may be performed **320**. If the first control value is successfully verified, a first "Full" state is reached and the routing table calculation using its attached areas' link state databases (comprising the non opaque LSAs) as input can be initiated, for instance by the OSPF-specific algorithm described in Section 16 of RFC 2328. Also, if the first control value is successfully verified, database description packets are sent **330** to the neighboring router for LSAs of a second link state database portion, which comprises LSAs of a type in the range assigned to opaque LSAs. After ascertaining **335** that a full sequence of database description packets has been received, outdated LSAs of the second link state database portion are identified **340**, if the ascertaining was successful. Link state request packets are sent **350** to the neighboring router pertaining to more recent LSAs corresponding to the outdated LSAs. Link state updates are then received **360** for the outdated LSAs. A second control value, calculated over representative data of the second link state database portion, is exchanged **370** with a neighboring router. The locally computed control value is verified **375** against the one received from the neighboring router. Optionally, upon a successful verification **375**, the router enters **380** the "Full state" (state **130** from Figures 1 and 2).

Optionally, link state request packets are sent **331** to said neighboring router prior to the ascertaining **335.**

Optionally, an embodiment of the method of the present invention further comprises ascertaining **365** that a link state request list is empty prior to the exchanging **370** of the second control value.

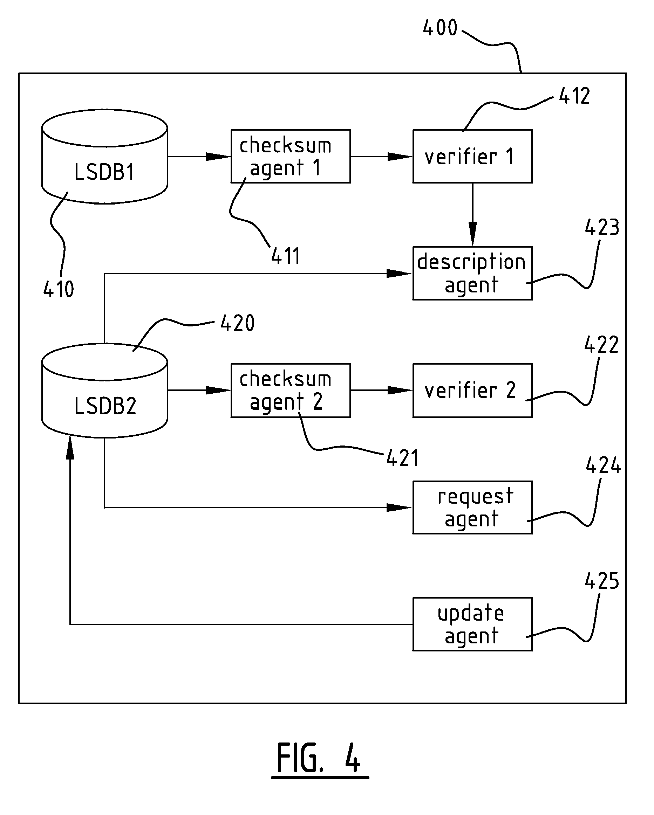

With reference to Figure 4, an embodiment of a router **400** according to the present invention may be conceived as follows. A first link state database portion **410** and a second link state database portion **420** are provided, to store LSAs of a type outside and inside the range assigned to opaque LSAs, respectively. A first checksum agent **411** is provided for calculating a first control value over the entries of the first link state database portion **410.** A second checksum agent **421** is provided for calculating a second checksum over the entries of the second link state database portion **420**. A first verifier **412** is provided to verify verification data received from a neighboring router against the first control value. A second verifier **422** is provided to verify verification data received from a neighboring router against the second control value. A description agent **423** is provided to generate database description packets for LSAs of the second link state database **420** for transmission to the neighboring router. A request agent **424** is provided to generate link state request packets for transmission to said neighbor, which link state request packets pertain to more recent opaque LSAs corresponding to said outdated opaque LSAs. An update agent **425** is provided to update the second link state database **420** on the basis of link state updates for the outdated opaque LSAs received from said neighboring router. It is further understood that a router, by its nature, is capable of transmitting and receiving data to and from a neighboring router, and that, although these capabilities are not explicitly shown in the block diagram of Figure 4, the various agents described herein rely on and/or cooperate with these capabilities.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for exchanging data between routers, comprising:
receiving from a neighboring router a first control value, calculated over representative data of a first link state database portion, which comprises LSAs of a type outside the range assigned to opaque LSAs.

2. The method of claim 1, further comprising:
sending database description packets for LSAs of a second link state database portion, which comprises LSAs of a type in the range assigned to opaque LSAs, to said neighboring router;
identifying outdated LSAs of said second link state database portion;
sending link state request packets to said neighboring router pertaining to more recent LSAs corresponding to said outdated LSAs;
receiving link state updates for said outdated LSAs;
receiving a second control value, calculated over representative data of the second link state database portion.

3. The method of claim 2, wherein each of said database description packets has a sequence number, further comprising receiving from said neighboring router an acknowledgment for each of said database description packets.

4. The method of claim 3, wherein the sending of each one of said database description packets other than the first one is contingent on said receiving from said neighboring router of said acknowledgment for the most recently transmitted one of said database description packets.

5. The method of any of claims 2-4, further comprising ascertaining that a link state request list is empty prior to said receiving of said second control value.

6. The method of any of claims 2-5, further comprising verifying said second control value and entering a Full state if said verifying of said second control value is successful.

7. The method of any of the preceding claims, further comprising verifying said first control value and starting an exchange of LSAs of a type outside the range assigned to opaque LSAs if said verifying of said first control value is unsuccessful.

8. A router, comprising:
a first link state database portion for storing LSAs of a type outside the range assigned to opaque LSAs;
a first checksum agent for calculating a first control value over the entries of said first link state database portion;
a first verifier adapted to verify verification data received from a neighboring router against said first control value;
a second link state database portion for storing LSAs of types in the range assigned to opaque LSAs;
a description agent adapted to generate database description packets for LSAs of said second link state database portion for transmission to said neighboring router;
a request agent adapted to generate link state request packets for transmission to said neighbor, said link state request packets pertaining to more recent opaque LSAs corresponding to said outdated opaque LSAs;
an update agent adapted to update said second link state database portion on the basis of link state updates for said outdated opaque LSAs received from said neighboring router;
a second checksum agent for calculating a second control value over the entries of said second link state database portion; and
a second verifier adapted to verify verification data received from a neighboring router against said second control value.
